# EUROPEAN PATENT APPLICATION

(11) **EP 4 446 793 A1**
(43) Date of publication of application: **16.10.2024**
(21) Application number: 23167771.7
(22) Date of filing: 13.04.2023
(51) Int. Cl.: G02B 21/18, G02B 21/36, G02B 27/62, G01N 21/64, G01N 15/14

(54) **CONTROL ARRANGEMENT FOR CONTROLLING AN OPTICAL ADJUSTMENT DEVICE AND METHOD**

(71) Applicant: Leica Microsystems CMS GmbH, 35578 Wetzlar (DE)
(72) Inventor: Beljan, Mate, 35578 Wetzlar (DE); Keul, Oliver, 35578 Wetzlar (DE); Körber, Tim Deniz, 35578 Wetzlar (DE); Ritschel, Kai, 35578 Wetzlar (DE)
(74) Representative: Schaumburg und Partner Patentanwälte mbB

(57) **Abstract**

A control arrangement 132 for controlling an optical adjustment device 122 of an imaging device 100 comprises a display device 126 configured to display a graphical information to a user, and a controller 124 configured to receive image data from a first detector element 118 being mounted to the imaging device 100 by the optical adjustment device 122, receive image data from a second detector element 120 of the imaging device 100, and to control at least the display device 126 for updating the graphical information in response to the image data. The controller 124 is configured to either instruct the user or to control drives of the optical adjustment device 122 to perform an optical adjustment of the optical adjustment device 122.

## Description

### Technical field

The invention relates to a control arrangement for controlling an optical adjustment device of an imaging device. The invention further relates to a method for controlling an optical adjustment device of an imaging device.

### Background

In the art, microscopes are known that comprise two or more cameras, for example for capturing short-wavelength light and long-wavelength light respectively. Ideally, the images captured by the two cameras are aligned such that structures imaged in a first image captured by one camera can easily be identified in a second image captured by another camera. A factory-side calibration is not practical because such microscopes are typically not delivered as a whole. Further, such microscopes are susceptible to changes, such as intentional changes, for example switching to a different camera for a different experiment or user, and unintentional changes, for example one of the cameras may be accidentally twisted when the microscope is bumped or a cable is pulled.

In order to align the cameras user-side, the cameras may be moved within their mounts. However, this only allows for a coarse alignment. For fine adjustments, one or more of the cameras may be mounted by an optical adjustment device which allows the mounted camera to be moved relative to the microscope. However, adjustments to the camera's position are often made manually, sometimes with the aid of an external software. This process is error-prone and often requires a manual determination of identical points (fiducials) in multiple images. Especially in fluorescence microscopy, different cameras capture different wavelength ranges such that different structures are displayed in the different images. This makes identifying identical points in the different images challenging, especially for a novice user. Accordingly, the manual alignment of the cameras is a difficult and time-consuming task and only partially accurate.

### Summary

It is an object to provide a control arrangement for controlling an optical adjustment device of an imaging device and a method for controlling said optical adjustment device that assists a user, in particular a novice user, of the imaging device with an optical adjustment.

The aforementioned object is achieved by the subject-matter of the independent claims. Advantageous embodiments are defined in the dependent claims and the following description.

The proposed control arrangement for controlling an optical adjustment device of an imaging device comprises a display device configured to display a graphical information to a user, and a controller configured to receive image data from a first detector element being mounted to the imaging device by the optical adjustment device, receive image data from a second detector element of the imaging device, and to control at least the display device for updating the graphical information in response to the image data. The controller is further configured to: a) determine based on the image data whether a calibration sample has been placed in the field of view of the detection optics, b) determine based on the image data whether an angle of rotation between a first image of the calibration sample captured by the first detector element and a second image of the calibration sample captured by the second detector element is below a predetermined rotational threshold, c) control the display device to display to the user an instruction to rotate the first detector element using the optical adjustment device until the angle of rotation is below the rotational threshold, d) determine based on the image data whether an amount of first displacement along a first direction between the first image and the second image is below a predetermined first translational threshold, e) control the display device to display to the user an instruction to move the first detector element along the first direction using the optical adjustment device until the amount of first displacement is below the first translational threshold, f) determine based on the image data whether an amount of second displacement along a second direction perpendicular to the first direction between the first image and the second image is below a predetermined second translational threshold, and g) control the display device to display to the user an instruction to move the first detector element along the second direction using the optical adjustment device until the amount of second displacement is below the second translational threshold.

The angle of rotation between the first image and the second image is understood as the smaller angle between the first image and the second image in this document. Preferably the first direction and the second direction correspond to the x-direction and the y-direction of the imaging device, respectively. In other words, the first direction and the second direction are preferably parallel to either the optical axis of the detection optics or the light propagation direction of a beam path originating from the detection optics.

The control arrangement assists the user in performing an optical adjustment during which the first detector element and the second detector element are aligned. The control arrangement constantly compares the first image and the second image during the optical adjustment, in order to give real time feedback to the user on the status of the optical adjustment. The rotation between the first detector element and the second detector element is corrected first. This is done by determining the angle of rotation between the first image and the second image and rotating the first detector element relative to the second detector element until the angle of rotation is below the rotational threshold. The remaining rotation between the first image and the second image can be corrected computationally. After the rotation has been corrected, the linear displacement between the first detector element and the second detector element is corrected. For that, the first detector is moved linearly along the first direction and the second direction until the amount of first displacement is below the first translational threshold and the amount of second displacement is below the second translational threshold. The remaining displacement between the first image and the second image can again be corrected computationally. By assisting the user to correct a rotation and linear displacement between the first detector element and the second detector element, the control arrangement makes the optical adjustment device much easier to use for the novice user and helps speed up the optical adjustment process for the advanced user.

In this embodiment of the control arrangement, the optical adjustment is performed manually by the user by means of one or more adjustment elements of the optical adjustment device, for example by means of micrometer screws. In an alternative embodiment, drives of the optical adjustment device are used to rotate and linearly move the first detector element.

In the alternative embodiment, the control arrangement for controlling the optical adjustment device of the imaging device comprises a display device configured to display a graphical information to a user, and a controller configured to receive image data from a first detector element being mounted to the imaging device by the optical adjustment device, receive image data from a second detector element of the imaging device, and to control at least the display device for updating the graphical information in response to the image data. The controller is further configured to: a) control the display device to display to the user a status of an optical adjustment of the optical adjustment device, b) determine based on the image data whether a calibration sample has been placed in the field of view of the detection optics, c) determine based on the image data whether an angle of rotation between a first image of the calibration sample captured by the first detector element and a second image of the calibration sample captured by the second detector element is below a predetermined rotational threshold, d) control a first drive of the optical adjustment device to rotate the first detector element until the angle of rotation is below the rotational threshold, e) determine based on the image data whether an amount of first displacement along a first direction between the first image and the second image is below a predetermined first translational threshold, f) control a second drive of the optical adjustment device to move the first detector element along the first direction until the amount of first displacement is below the first translational threshold, g) determine based on the image data whether an amount of second displacement along a second direction perpendicular to the first direction between the first image and the second image is below a predetermined second translational threshold, and h) control a third drive of the optical adjustment device to move the first detector element along the second direction until the amount of second displacement is below the second translational threshold.

In the alternative embodiment, the optical adjustment is performed mostly automatically by the controller. The alternative embodiment has the same advantages as the embodiment described above, in particular with regards to ease of use.

In both alternative embodiments the controller may be configured to control the display device to display to the user an instruction to arrange the calibration sample in the field of view and the focus of a detection optics of the imaging device. The controller may also be configured to control a sample handling device of the imaging device to arrange the calibration sample in the field of view and the focus of a detection optics of the imaging device.

In a preferred embodiment, the controller is further configured to determine based on the image data whether the calibration sample has been placed in the focus of the detection optics. The controller may also be configured to control the display device to display to the user an instruction to adjust a functional unit of the imaging system until the sample has been placed in the focus of the detection optics. For example, the functional unit may be a z-drive of the imaging system configured to either move the detection optics or the calibration sample along the optical axis of the detection optics. The controller may be further configured to control the functional unit to arrange the calibration sample in the focus of the detection optics. If the calibration sample is in the focus of the detection optics, the angle of rotation, the first displacement, and the second displacement can be determined much more precise from the first image and the second image.

In another preferred embodiment, the controller is configured to determine based on the image data whether an amount of third displacement along a third direction perpendicular to the first and second directions between the first image and the second image is below a predetermined third translational threshold. The controller is further configured to control the display device to display to the user an instruction to move the first detector element along the third direction using the optical adjustment device until the amount of third displacement is below the third translational threshold. Alternatively, the controller is configured to control a fourth drive of the optical adjustment device to move the first detector element along the third direction until the amount of third displacement is below the third translational threshold. Preferably the third direction corresponds to the z-direction of the imaging device. In other words, the third direction is preferably parallel to either the optical axis of the detection optics or the light propagation direction of a beam path originating from the detection optics. In this embodiment, the control arrangement assists the user in correcting a difference in focal length between the first detector element and the second detector element, and in reducing chromatic shift. Thereby, usability is further increased.

In another preferred embodiment, the controller is further configured to control the display device to display to the user an instruction to adjust the exposure of the first detector element and the second detector element. Adjusting the exposure of the first detector element and the second detector element can increase the image quality and the saturation of the first image and the second image, respectively. Adjusting the exposure also adjusts the brightness of the first image and the second image, respectively. It is advantageous for determining the angle of rotation as well as the linear displacement, if the first image and the second image are of approximately equal brightness. It is further advantageous if no saturated pixels exist in the first image and the second image.

In another preferred embodiment, the controller is further configured to control the display device to display at least one visual element that indicates to the user whether the angle of rotation, the amount of first displacement, the amount of second displacement, and/or the amount of third displacement is above or below the rotational threshold, the first translational threshold, the second translational threshold and/or the third translational threshold, respectively. The visual element may be part of an instruction to the user or a part of the status of the optical adjustment displayed to the user. As part of an instruction to the user, the visual element greatly aids the user in the optical adjustment by providing real time feedback on the current status of the optical adjustment. As part of the status of the optical adjustment in an automatic adjustment of the optical adjustment device, the visual element likewise provides real time feedback to the user, allowing the user to interrupt or correct the automatic adjustment should the need arise. Providing visual feedback thus further improves the usability of the control arrangement.

In another preferred embodiment, the visual element further indicates a direction an adjustment element of the optical adjustment device needs to be moved in in order to reduce the angle of rotation, the amount of first displacement, the amount of second displacement, and/or the amount of third displacement below the rotational threshold, the first translational threshold, the second translational threshold and/or the third translational threshold, respectively. The visual element thereby aids the user in the manual optical adjustment of the optical adjustment device by indicating to them the direction the adjustment element needs to be moved by the user. This further increases the ease of use of the control arrangement.

In another preferred embodiment, the controller is configured to determine based on the image data whether a predefined element of the calibration sample is within the field of view of the detection optics. The controller is further configured to control the display device to display to the user an instruction to move the calibration sample in the field of view of the detection optics until the predefined element is within the field of view of the detection optics. Alternatively, the controller is configured to control a positioning device of the imaging device to move the calibration sample in the field of view of the detection optics until the predefined element is within the field of view of the detection optics. The positioning device may for example be a motorized microscope stage on which the calibration sample is arranged. The arrangement of the calibration sample such that the predefined element is within the field of view of the detection optics is performed preferably before the angle of rotation is determined. The calibration sample may comprise an element that has a preferred direction, for example an L-shaped element such as a corner or an edge of the calibration sample. This element with a preferred direction may be used as a guide for determining the angle of rotation between the first image and the second image, making it easier and faster to minimize the angle of rotation.

In another preferred embodiment, the control arrangement comprises an input device configured to receive user input from the user. The controller may in particular be configured to start controlling the optical adjustment device based on a user input. Preferably the control arrangement comprises a touchscreen comprising the display device and the input device. Combining the display device and the input device into a single element greatly increases the ergonomics of the control arrangement.

In another preferred embodiment, the controller is configured to control the exposure of the first detector element and/or the second detector element based on a user input. This allows the user to manually adjust the brightness of the first image and the second image, respectively. The adjustment of the brightness of the first image and the second image has the abovementioned benefits. Alternatively, the controller may be configured to adjust the exposure of the first detector element and/or the second detector element automatically based on a predetermined condition, for example the brightness of the first image and the second image.

In another preferred embodiment, the controller is configured to perform an image registration on the first image and the second image, when the angle of rotation is below the rotational threshold, the amount of first displacement is below the first translational threshold, and the amount of second displacement is below the second translational threshold. The controller may be configured to start the image registration based on a user input. Alternatively, the controller may perform the image registration when the above defined conditions are met. After the first detector element and the second detector element have been mechanically aligned using the optical adjustment device, a certain misalignment may remain. This misalignment may be corrected computationally by performing the image registration. Algorithms exist that can match images pixel perfect or even on the sub-pixel level. Performing image registration on the first image and the second image therefore results in highly aligned images.

In another preferred embodiment, the calibration sample comprises fiducial elements that are visible in the optical spectrums observed by both the first detector element and the second detector element. Preferably, the fiducial elements are arranged in arrangement that is not rotationally invariant, for example a two-dimensional grid. The calibration sample may comprise a microscope slide or a similar sample carrier element on which the fiducial elements are arranged.

The invention also relates to an imaging device, comprising the control arrangement described above. The imaging device further comprises the optical adjustment device, the detection optics configured to receive detection light and to direct the detection light into a main beam path, a beam splitting element configured to direct part of the detection light into a first branched beam path and another part of the detection light into a second branched beam path, the first detector element arranged in the first branched beam path, configured to generate image data from the detection light received via the first branched beam path and mounted by the optical adjustment device, and the second detector element arranged in the second branched beam path and configured to generate image data from the detection light received via the second branched beam path.

The imaging device is in particular a microscope. The first detector element and the second detector element can be aligned using the optical adjustment device aided by the control arrangement, thereby allowing to capture two simultaneous, registered images of the same sample, for example in different wavelength ranges. The imaging device therefore has the same advantages as the control arrangement described above, in particular with regard to usability.

In a preferred embodiment, the imaging device comprises a first camera port configured to receive the first detector element mounted on the optical adjustment device, and a second camera port configured to receive the second detector element. The first camera port and the second camera port may in particular comprise a c-mount or bayonet-mount. C-mounts and bayonet-mounts are widely used, in particular in microscopes, to mount cameras and other detector elements. The imaging device is therefore compatible with existing hardware, further increasing the versatility of the imaging device.

The invention also relates to a method for controlling the optical adjustment device of the imaging device described above. The method comprising the following steps: Determining whether a calibration sample has been placed in the field of view of the detection optics. Determining whether an angle of rotation between a first image of the calibration sample captured by the first detector element and a second image of the calibration sample captured by the second detector element is below a predetermined rotational threshold. Displaying to the user an instruction to rotate the first detector element using the optical adjustment device until the angle of rotation is below the rotational threshold. Determining whether an amount of first displacement along a first direction between the first image and the second image is below a predetermined first translational threshold. Displaying to the user an instruction to move the first detector element along the first direction using the optical adjustment device until the amount of first displacement is below the first translational threshold. Determining whether an amount of second displacement along a second direction perpendicular to the first direction between the first image and the second image is below a predetermined second translational threshold. Displaying to the user an instruction to move the first detector element along the second direction using the optical adjustment device until the amount of second displacement is below the second translational threshold.

In an alternative embodiment the method comprises the following steps: Displaying to the user the status of the optical adjustment of the optical adjustment device. Determining whether a calibration sample has been placed in the field of view of the detection optics. Determining whether an angle of rotation between a first image of the calibration sample captured by the first detector element and a second image of the calibration sample captured by the second detector element is below a predetermined rotational threshold. Controlling a first drive of the optical adjustment device to rotate the first detector element until the angle of rotation is below the rotational threshold. Determining whether an amount of first displacement along a first direction between the first image and the second image is below a predetermined first translational threshold. Controlling a second drive of the optical adjustment device to move the first detector element along the first direction until the amount of first displacement is below the first translational threshold. Determining whether an amount of second displacement along a second direction perpendicular to the first direction between the first image and the second image is below a predetermined second translational threshold. Controlling a third drive of the optical adjustment device to move the first detector element along the second direction until the amount of second displacement is below the second translational threshold.

The method has the same advantages as the claimed control arrangement. In particular, the method can be supplemented with the features of the dependent claims directed to the control arrangement. Furthermore, the control arrangement described above can be supplemented with the features described in this document in connection with the method.

The invention further relates to a computer program product comprising a program code that causes the imaging device described above to perform the method described above when run on a processor.

The computer program product has the same advantages as the control arrangement and the method described above. In particular, the computer program product can be supplemented with the features of the dependent claims directed to the control arrangement.

### Short Description of the Figures

Hereinafter, specific embodiments are described referring to the drawings, wherein:
- Figure 1: a schematic view of an imaging device according to an embodiment;
- Figure 2: a schematic view of an optical adjustment device of the imaging device according to Figure 1;
- Figure 3: a schematic view of a calibration sample;
- Figure 4: a flowchart of a method performed by a control arrangement of the imaging device according to Figure 1; and
- Figures 5 to 8: schematic views of a graphical user interface of the imaging device according to Figure 1.

### Detailed Description

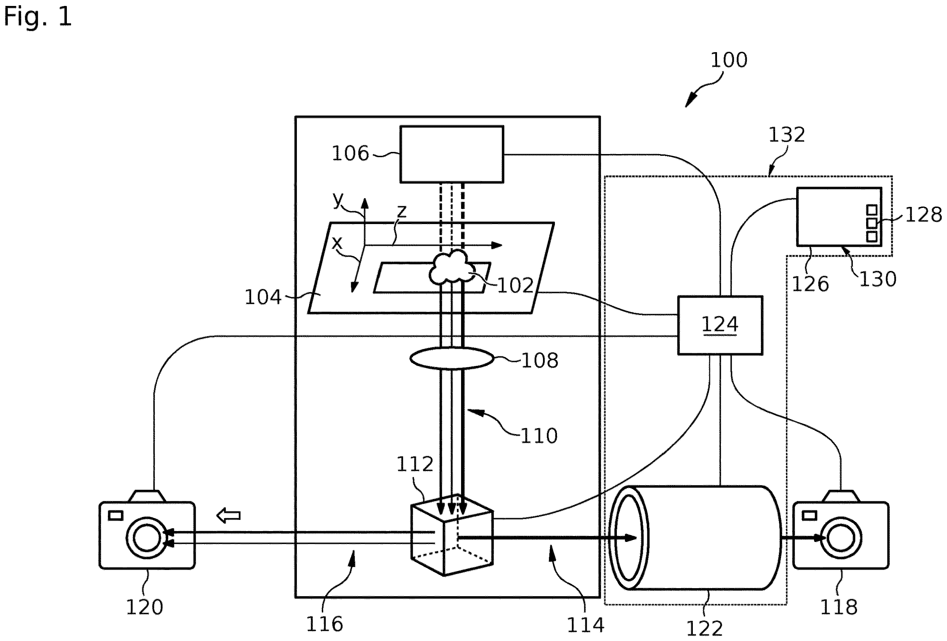

Figure 1 is a schematic view of an imaging device 100 according to an embodiment.

The imaging device 100 is exemplary formed as a microscope. More specifically, the imaging device 100 is formed as a fluorescence microscope configured to image a sample 102 by means of fluorescence imaging. However, the imaging device 100 is not limited to be a microscope, for example the imaging device 100 may also be a slide scanner or a flow cytometer, or any other imaging device 100 where two simultaneous images of the sample 102 are desired.

The sample 102 to be imaged is arranged on a positioning device 104 of the imaging device 100. The positioning device 104 is exemplary formed as a motorized microscope stage, also called X-Y-table, that is configured to move the sample 102 arranged thereon along two perpendicular directions. The two perpendicular directions are called the x-direction and the y-direction, respectively. In the present embodiment, a light source unit 106 of the imaging device 100 is arranged atop the sample 102 and the positioning device 104, and configured to emit excitation light for exciting fluorophores located within the sample 102. In other embodiments, the light source unit 106 may be arranged below the positioning device 104. The light source unit 106 may also be configured to emit other light, for example white light for facilitating conventional light microscope techniques such as reflected light microscopy or transmitted light microscopy. In the present embodiment, a detection light is formed by the fluorescence light emitted by the excited fluorophores. In other embodiments, the detection light may for example be formed by light that has passed the sample 102 or that has been reflected by the sample 102.

The imaging device 100 comprises a detection optics 108 arranged below the positioning device 104 that is exemplary formed as a microscope objective. The detection optics 108 captures the detection light emitted by the sample 102 and directs the detection light into a main beam path 110 of the imaging device 100. The main beam path 110 comprises a beam splitting element 112. The beam splitting element 112 splits the main beam path 110 into a first branched beam path 114 and into a second branched beam path 116 by directing a first part of the detection light into the first branched beam path 114, and directing a second part of the detection light into the second branched beam path 116. In the present embodiment, the beam splitting element 112 is exemplary formed as a dichroic beam splitting cube. In some embodiments the beam splitting element 112 may be configured to be inserted into and removed from the main beam path 110. When the beam splitting element 112 is not inserted into the main beam path 110, the main beam path 110 continues unhindered.

A first detector element 118 of the imaging device 100 is arranged in the first branched beam path 114 shown to branch of to the right in Figure 1. The first detector element 118 is configured to generate a first image from the detection light the first detector element 118 receives via the first branched beam path 114. A second detector element 120 of the imaging device 100 is arranged in the second branched beam path 116 shown to branch of to the left in Figure 1. The second detector element 120 is configured to generate a second image from the detection light the second detector element 120 receives via the second branched beam path 116.

Since the first branched beam path 114 and the second branched beam path 116 both split off from the main beam path 110, the first detector element 118 and the second detector element 120 can image the sample 102 simultaneously. By introducing different filter elements into the first branched beam path 114 and the second branched beam path 116, respectively, the first image and the second image will comprise different wavelengths of the detection light. This can be used to simultaneously image different structures of the sample 102, for example structures that have been stained with different fluorophores emitting fluorescence light of different wavelengths.

However, in order to relate the different structures in the first image and the second image, the two images need to be aligned. A relative offset and/or rotation of the first image and the second image is due to the arrangement of the first detector element 118 and the second detector element 120 relative to each other. In order to mechanically align the first detector element 118 and the second detector the first detector element 118 is mounted to the imaging device 100 by an optical adjustment device 122 that is configured to move to the first detector element 118 relative to the second detector element 120. The second detector element 120 is preferably firmly fixed to the imaging device 100.

In particular, the optical adjustment device 122 is configured to rotate the first detector element 118 about the light propagation direction of the first branched beam path 114, and to linearly move the first detector element 118 in at least two directions perpendicular to each other and to the light propagation direction. Since the first branched beam path 114 originates from the detection optics 108, rotating the first detector element 118 about the light propagation direction of the first branched beam path 114 corresponds to a rotation of the first image about the optical axis of the detection optics 108, i.e. the z-direction of the imaging device 100. Since the second detector element 120 is not moved this also rotates the first image relative to the second image. Likewise, linearly moving the first detector element 118 perpendicular to the light propagation direction of the first branched beam path 114 corresponds to moving the first image relative to the second image along the x-direction and the y-direction of the imaging device 100 respectively.

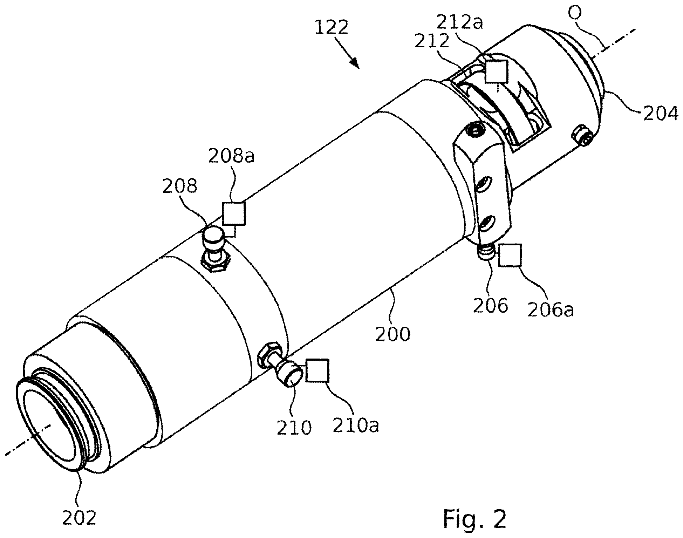

The optical adjustment device 122 may further be configured to linearly move to the first detector element 118 along a third direction perpendicular to the first direction and the second direction, i.e. along the light propagation direction of the first branched beam path 114. The movement along the third direction may be used to adjust the position of the detection plane of the first detector element 118 relative to the position of the focal plane along the light propagation direction of the first branched beam path 114. In other words, the movement along the third direction may be used to bring the first image into focus. Moving the first detector element 118 along the third direction may result in a difference in magnification between the first image and the second image which can be corrected computationally. The optical adjustment device 122 is described in more detail below with reference to Figure 2.

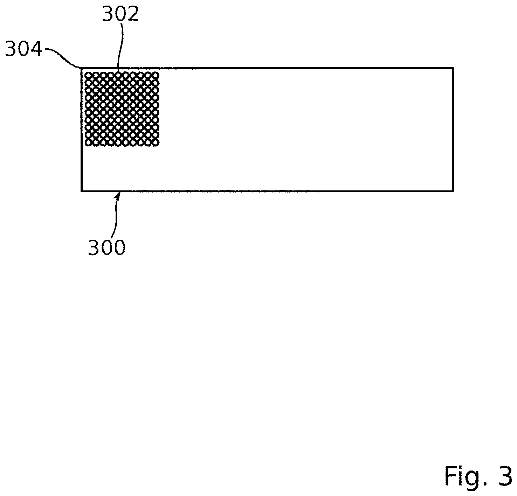

The imaging device 100 further comprises a controller 124, a display device 126 and an input device 128. The display device 126 and the input device 128 are exemplary formed by a touchscreen 130. The controller 124 is configured to control the functional units of the imaging device 100, in particular the optical adjustment device 122 and the display device 126. The controller 124 is further configured to receive user input via the input device 128 and image data corresponding to the first image and the second image from the first detector element 118 and the second detector element 120, respectively. At least the optical adjustment device 122, the display device 126, and the controller 124 form a control arrangement 132 of the imaging device 100. Further elements described in this document may be part of the control arrangement 132. The control arrangement 132 is configured to perform a method for assisting a user of the imaging device 100 in making an optical adjustment in order to align the first image and the second image. The method uses a calibration sample 300 which is described below in more detail with reference to Figure 3.

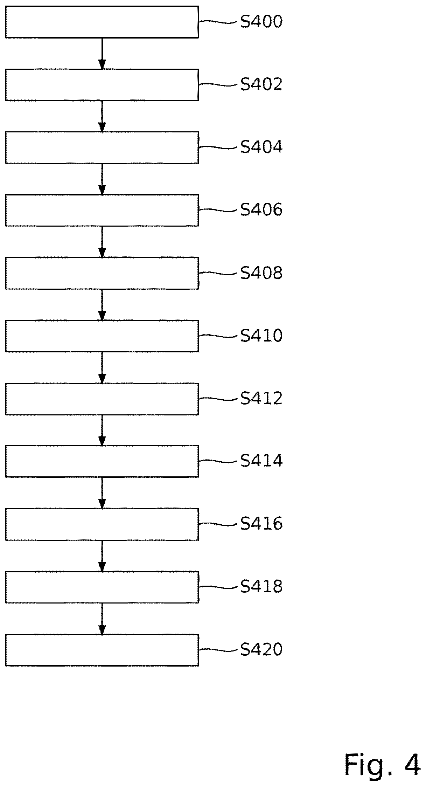

The method performed by the control arrangement 132 comprises the following steps: Determining whether the calibration sample 300 has been placed in the field of view of the detection optics 108. Determining based on the image data an angle of rotation between the first image and the second image. Correcting the relative rotation between the first image and the second image by rotating the first detector element 118 until the angle of rotation is below a predetermined rotational threshold. Determining based on the image data an amount of first displacement along the first direction between the first image and the second image, and an amount of second displacement along the second direction between the first image and the second image. Correcting the linear displacement between the first image and the second image by linearly moving the first detector element 118 until the first displacement is below a first translational threshold, and the second displacement is below a second translational threshold. The control unit may instruct the user to rotate and linearly move the first detector element 118 manually using adjustment elements 206, 208, 210, 212 (c.f. Figure 2) of the optical adjustment device 122. Alternatively, the control unit may control drives 206a, 208a, 210a, 212a (c.f. Figure 2) of the optical adjustment device 122 to rotate and linearly move the first detector element 118 automatically. The method is described below in more detail with reference to Figure 4.

Figure 2 is a schematic view of the optical adjustment device 122 of the imaging device 100 according to Figure 1.

The optical adjustment device 122 comprises a housing 200 holding the optical components of the optical adjustment device 122. A first end 202 of the optical adjustment device 122 is connectable to a camera port of the imaging device 100, for example a c-mount or a bayonet-mount. A second end 204 of the optical adjustment device 122 is connectable to the first detector element 118. When the optical adjustment device 122 is mounted to the imaging device 100, the light propagation direction of the first branched beam is parallel to the optical axis O of the optical adjustment device 122.

A first adjustment element 206, exemplary formed as a micrometer screw, can be adjusted in order to rotate the first detector element 118 about the optical axis of the optical O adjustment device 122 when the first detector element 118 is mounted to the optical adjustment device 122. The first adjustment element 206 may be operated manually. The optical adjustment device 122 may also comprise a first drive 206a for operating the first adjustment element 206 automatically. The first drive 206a is controllable by the controller 124 of the imaging device 100.

A second adjustment element 208 and a third adjustment element 210, exemplary formed as micrometer screws, can be adjusted in order to linearly move the first detector element 118 along the first direction and the second direction, respectively, when the first detector element 118 is mounted to the optical adjustment device 122. The second adjustment element 208 and the third adjustment element 210 may be operated manually. The optical adjustment device 122 may also comprise a second drive 208a and/or a third drive 210 for automatically operating the second adjustment element 208 and/or the third adjustment element 210, respectively. The second drive 208a and the third drive 210 are controllable by the controller 124 of the imaging device 100.

The optical adjustment device 122 further comprises a fourth adjustment element 212, exemplary formed as a focus wheel, that can be adjusted in order to linearly move the first detector element 118 along the third direction, i.e. along the optical axis O of the optical adjustment device 122. The fourth adjustment element 212 may be operated manually. The optical adjustment device 122 may also comprise a fourth drive 212a for operating the fourth adjustment element 212 automatically. The fourth drive 212a is controllable by the controller 124 of the imaging device 100.

Figure 3 is a schematic view of the calibration sample 300.

The calibration sample 300 is exemplary formed as a microscope slide. However, the calibration sample 300 may be any suitable element that can be placed in the field of view of the detection optics 108, for example a petri-dish, a multiwell plate or a similar sample 102 carrier. The calibration sample 300 may also be a part of the positioning device 104 of the imaging device 100. The calibration sample 300 comprises fiducial elements 302, exemplary formed as round elements, that are visible in the optical spectrums observed by both the first detector element 118 and the second detector element 120. The fiducial elements 302 are arranged in a two-dimensional grid. The calibration sample 300 has a corner which forms a predefined element 304 having an L-shape, and thus a preferred direction. This predefined element 304 is used as a guide for determining the angle of rotation between the first image and the second image.

Figure 4 is a flowchart of the method performed by the control arrangement 132 of the imaging device 100 according to Figure 1.

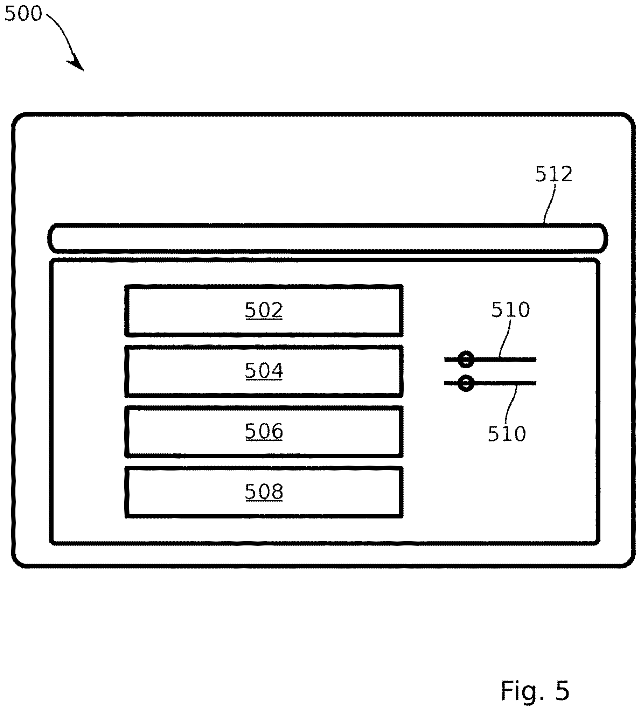

The method is started in step S400. In particular, the method is started based on a user request, for example a user input received by the controller 124 via the input device 128. In the optional step S402 the controller 124 controls the display device 126 to display to the user an instruction 502 (c.f. Figure 5) to arrange the calibration sample 300 in the field of view of the detection optics 108 of the imaging device 100. Alternatively, the controller 124 controls a sample 102 handling device of the imaging device 100 to arrange the calibration sample 300 in the field of view the detection optics 108. The sample 102 handling device may for example be the positioning device 104 or a robotic arm configured to move the calibration sample 300. At least starting with step 404, preferably starting with step 402, the first detector element 118 and the second detector element 120 repeatedly capture the first image and the second image. The current first image and the current second image may be displayed on the display device 126 to aid the user during performance of the method by providing real time feedback on the status of the optical adjustment.

In step 404 the controller 124 determines based on the image data whether a calibration sample 300 has been placed in the field of view of the detection optics 108. If the controller 124 detects the calibration sample 300, the method continues in step S406. In step 406 the controller 124 controls the display device 126 to display to the user an instruction 504 (c.f. Figure 5) to adjust the exposure of the first detector element 118 and/or the second detector element 120 until the first image and the second image are of approximately equal brightness. The controller 124 may in particular control the display device 126 to display control elements 510 (c.f. Figure 5), for example sliders, for controlling the exposure of the first detector element 118 and/or the second detector element 120. Alternatively, the controller 124 may adjust the exposure of the first detector element 118 and/or the second detector element 120 automatically, for example based on a predetermined brightness condition.

In the optional step S408 the controller 124 controls the display device 126 to display to the user an instruction 506 (c.f. Figure 5) to focus the detection optics 108 on the calibration slide. Alternatively, the controller 124 may perform an autofocus method to focus the detection optics 108 on the calibration slide. In the optional step 410 the controller 124 controls the display device 126 to display to the user an instruction 508 (c.f. Figure 5) to move the calibration sample 300 in the field of view of the detection optics 108 until the predefined element 304 is within the field of view of the detection optics 108. Alternatively, the controller 124 controls the positioning device 104 to move the calibration sample 300 in the field of view of the detection optics 108 until the predefined element 304 is within the field of view of the detection optics 108. The controller 124 may then also determine based on the image data whether the predefined element 304 is within the field of view of the detection optics 108, and continue only if the predefined element 304 is detected within the field of view of the detection optics 108. The steps S406, 408, and S410 may be performed concurrently or in any order.

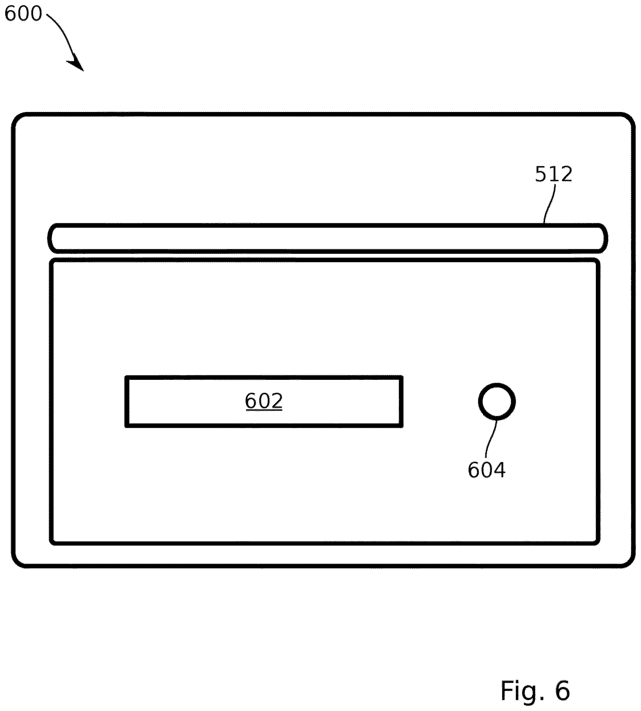

In step S412 the controller 124 determines the angle of rotation between the first image and the second image based on the image data. The controller 124 controls the display device 126 to display to the user a first visual indicator 604 (c.f. Figure 6) indicating whether the angle of rotation is below a predetermined rotational threshold. The controller 124 controls the display device 126 to display to the user an instruction 602 (c.f. Figure 6) to rotate the first detector element 118 using the first adjustment element 206 of the optical adjustment device 122 until the angle of rotation is below the rotational threshold as indicated by the first visual indicator 604. Alternatively, the controller 124 controls the first drive 206a of the optical adjustment device 122 to rotate the first detector element 118 until the angle of rotation is below the rotational threshold. During step S412 the controller 124 controls the display device 126 to continuously update the first visual indicator 604 based on the image data in order to provide real time feedback to the user on the status of the optical adjustment. When the angle of rotation is below the rotational threshold, the method continues in step S414.

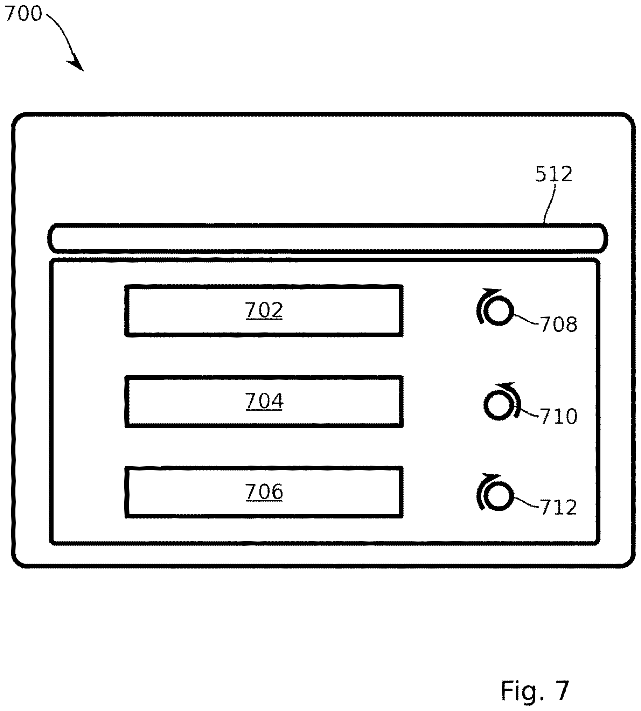

In step 414 the controller 124 determines based on the image data an amount of first displacement along the first direction between the first image and the second image, and an amount of second displacement along the second direction between the first image and the second image based on the image data. The controller 124 controls the display device 126 to display to the user a second visual indicator 708 (c.f. Figure 7) indicating whether the amount of first displacement is below a predetermined first translational threshold, and a third visual indicator 710 (c.f. Figure 7) indicating whether the amount of second displacement is below a predetermined second translational threshold. The second visual indicator 708 and the third visual indicator 710 may comprise a directional component, for example an arrow, to indicate to the user in which direction second adjustment element 208 and the third adjustment element 210 need to be moved in order to minimize the first displacement and the second displacement, respectively. Alternatively, the controller 124 controls the second drive 208a of the optical adjustment device 122 to move the first detector element 118 along the first direction until the amount of first displacement is below the first translational threshold, and the third drive 210 of the optical adjustment device 122 to move the first detector element 118 along the second direction until the amount of second displacement is below the second translational threshold. During step S414 the controller 124 controls the display device 126 to continuously update the second visual indicator 708 and the third visual indicator 710 based on the image data in order to provide real time feedback to the user on the status of the optical adjustment.

In the optional step 416 the controller 124 determines based on the image data an amount of third displacement along the third direction between the first image and the second image. The controller 124 controls the display device 126 to display to the user a fourth visual indicator 712 (c.f. Figure 7) indicating whether the amount of third displacement is below a predetermined third translational threshold. The fourth visual indicator 712 may also comprise a directional component to indicate to the user in which direction fourth adjustment element 212 needs to be moved in order to minimize the third displacement. Alternatively, the controller 124 controls the fourth drive 212a of the optical adjustment device 122 to move the first detector element 118 along the third direction until the amount of third displacement is below the third translational threshold. During step S416 the controller 124 controls the display device 126 to continuously update the fourth visual indicator 712 based on the image data in order to provide real time feedback to the user on the status of the optical adjustment. The steps S414 and S416 may be performed concurrently or in any order. When the amount of first displacement is below the first translational threshold, the amount of second displacement is below the second translational threshold, and, if step S416 is performed, the amount of third displacement is below the third translational threshold, the method continues in step S418.

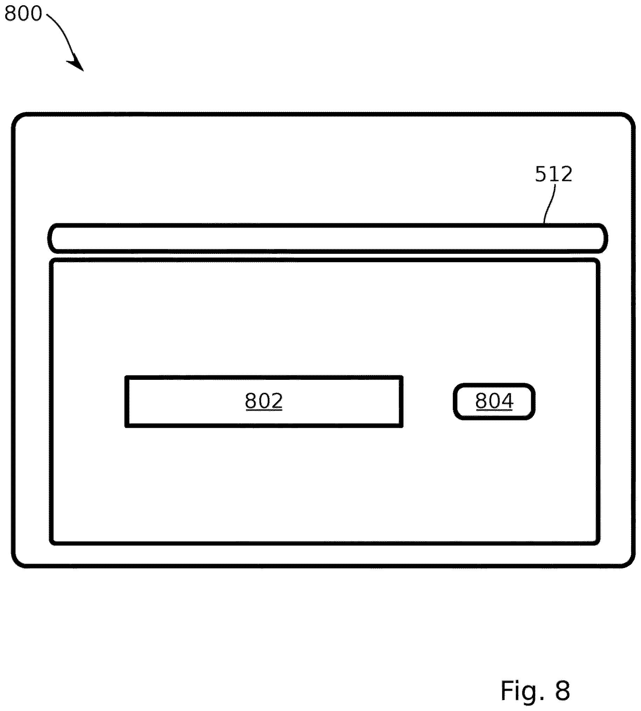

In the optional step S418 the controller 124 controls the display device 126 to display a prompt 802 (c.f. Fig. 8) to the user, whether to perform an image registration on the first image and the second image. Based on a user input, the controller 124 performs the image registration on the first image and the second image. The method is stopped in step S420.

Figures 5 to 8 are schematic views of a graphical user interface 500, 600, 700, 800 of the imaging device 100 according to Figure 1.

The graphical user interface 500 in Figure 5 is displayed to the user during the steps S402 to S410 of the method described above with reference to Figure 4. The graphical user interface 500 comprises the instruction 502 to place the calibration sample 300 in the field of view of the detection optics 108, the instruction 504 to adjust the exposure of the first detector element 118 and the second detector element 120, the instruction 506 to focus the detection optics 108 on the calibration sample 300, and the instruction 508 to place the predefined element 304 in the field of view of the detection optics 108. The instructions 502, 504, 506, 508 are arranged in that order starting from the top. The graphical user interface 500 also comprises the two control elements 510 with which the user can adjust the exposure of the first detector element 118 and the second detector element 120. The control elements 510 are exemplary formed as sliders and arranged to the right of the instructions 502, 504, 506, 508. The graphical user interface 500 further comprises a progress bar 512 arranged atop the instructions 502, 504, 506, 508 and the controls elements 510. The progress bar 512 indicates to current progress of the optical adjustment.

The graphical user interface 600 in Figure 6 is displayed to the user during step S412 of the method described above with reference to Figure 4. The graphical user interface 600 comprises the instruction 602 to rotate the first detector element 118 using the first adjustment element 206 until the angle of rotation is below the rotational threshold. The graphical user interface 600 further comprises the first visual indicator 604. The first visual indicator 604 is exemplary formed as a circle having a first color, for example red, when the angle of rotation is above the rotational threshold, and a second color, for example green, when angle of rotation is below the rotational threshold. The first visual indicator 604 may change color continuously from the first color towards the second color when the when the angle of rotation is made smaller, for example by adjusting the first adjustment element 206 in the right direction, and from the second color towards the first color when the when the angle of rotation is made larger, for example by adjusting the first adjustment element 206 in the wrong direction.

The graphical user interface 700 in Figure 7 is displayed to the user during the steps S414 and S416 of the method described above with reference to Figure 4. The graphical user interface 700 comprises the instruction 702 to move the first detector element 118 along the first direction using the second adjustment element 208 until the amount of first displacement is below the first translational threshold, the instruction 704 to move the first detector element 118 along the second direction using the third adjustment element 210 until the amount of second displacement is below the second translational threshold, and the instruction 706 to move the first detector element 118 along the third direction using the fourth adjustment element 212 until the amount of third displacement is below the third translational threshold. The graphical user interface 700 further comprises the second visual indicator 708, the third visual indicator 710, and the fourth visual indicator 712, each comprising an arrow. The length of the arrow in each case indicates to the user the amount of first displacement, second displacement, and third displacement, respectively. The direction of the arrow in each case indicates to the user the direction the second adjustment element 208, the third adjustment element 210, and the fourth adjustment element 212 need to be moved, respectively.

The graphical user interface 800 in Figure 8 is displayed to the user during step S418 of the method described above with reference to Figure 4. The graphical user interface 800 comprises the prompt 802 whether to perform an image registration on the first image and the second image. The graphical user interface 800 further comprises a control element 804 for starting the image registration.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Imaging device
- 102: Sample
- 104: Positioning device
- 106: Light source unit
- 108: Detection optics
- 110: Main beam path
- 112: Beam splitting element
- 114, 116: Branched beam path
- 118, 120: Detector element
- 122: Optical adjustment device
- 124: Controller
- 126: Display device
- 128: Input device
- 130: Touchscreen
- 132: Control arrangement
- 200: Housing
- 202,204: End
- 206, 208, 210, 212: Adjustment element
- 206a, 208a, 210a, 212a: Drive
- 300: Calibration sample
- 302: Fiducial element
- 304: Element
- 500: Graphical user interface
- 502, 504, 506, 508: Instruction
- 510: Control element
- 512: Progress bar
- 600: Graphical user interface
- 602: Instruction
- 604: Visual indicator
- 700: Graphical user interface
- 702, 704, 706: Instruction
- 708, 710, 712: Visual indicator
- 800: Graphical user interface
- 802: Prompt
- 804: Control element
- O: Optical axis

## Claims

1. A control arrangement 132 for controlling an optical adjustment device 122 of an imaging device 100, the control arrangement 132 comprising:
a display device 126 configured to display a graphical information to a user, and
a controller 124 configured to receive image data from a first detector element 118 being mounted to the imaging device 100 by the optical adjustment device 122, receive image data from a second detector element 120 of the imaging device 100, and to control at least the display device 126 for updating the graphical information in response to the image data,
wherein the controller 124 is further configured
a) to determine based on the image data whether a calibration sample 300 has been placed in the field of view of the detection optics 108,
b) to determine based on the image data whether an angle of rotation between a first image of the calibration sample 300 captured by the first detector element 118 and a second image of the calibration sample 300 captured by the second detector element 120 is below a predetermined rotational threshold,
c) to control the display device 126 to display to the user an instruction to rotate the first detector element 118 using the optical adjustment device 122 until the angle of rotation is below the rotational threshold,
d) to determine based on the image data whether an amount of first displacement along a first direction between the first image and the second image is below a predetermined first translational threshold,
e) to control the display device 126 to display to the user an instruction to move the first detector element 118 along the first direction using the optical adjustment device 122 until the amount of first displacement is below the first translational threshold,
f) to determine based on the image data whether an amount of second displacement along a second direction perpendicular to the first direction between the first image and the second image is below a predetermined second translational threshold, and
g) to control the display device 126 to display to the user an instruction to move the first detector element 118 along the second direction using the optical adjustment device 122 until the amount of second displacement is below the second translational threshold.

2. A control arrangement 132 for controlling an optical adjustment device 122 of an imaging device 100, the control arrangement 132 comprising:
a display device 126 configured to display a graphical information to a user, and
a controller 124 configured to receive image data from a first detector element 118 being mounted to the imaging device 100 by the optical adjustment device 122, receive image data from a second detector element 120 of the imaging device 100, and to control at least the display device 126 for updating the graphical information in response to the image data,
wherein the controller 124 is further configured
a) to control the display device 126 to display to the user a status of an optical adjustment of the optical adjustment device 122,
b) to determine based on the image data whether a calibration sample 300 has been placed in the field of view of the detection optics 108,
c) to determine based on the image data whether an angle of rotation between a first image of the calibration sample 300 captured by the first detector element 118 and a second image of the calibration sample 300 captured by the second detector element 120 is below a predetermined rotational threshold,
d) to control a first drive 206a of the optical adjustment device 122 to rotate the first detector element 118 until the angle of rotation is below the rotational threshold,
e) to determine based on the image data whether an amount of first displacement along a first direction between the first image and the second image is below a predetermined first translational threshold,
f) to control a second drive 208a of the optical adjustment device 122 to move the first detector element 118 along the first direction until the amount of first displacement is below the first translational threshold,
g) to determine based on the image data whether an amount of second displacement along a second direction perpendicular to the first direction between the first image and the second image is below a predetermined second translational threshold, and
h) to control a third drive 210 of the optical adjustment device 122 to move the first detector element 118 along the second direction until the amount of second displacement is below the second translational threshold.

3. The control arrangement 132 according to claim 1 or 2, wherein the controller 124 is further configured to determine based on the image data whether the calibration sample 300 has been placed in the focus of the detection optics 108.

4. The control arrangement 132 according to any one of the previous claims, wherein the controller 124 is further configured to determine based on the image data whether an amount of third displacement along a third direction perpendicular to the first and second directions between the first image and the second image is below a predetermined third translational threshold; and to control the display device 126 to display to the user an instruction to move the first detector element 118 along the third direction using the optical adjustment device 122 until the amount of third displacement is below the third translational threshold; or
to control a fourth drive 212a of the optical adjustment device 122 to move the first detector element 118 along the third direction until the amount of third displacement is below the third translational threshold.

5. The control arrangement 132 according to any one of the previous claims, wherein the controller 124 is further configured to control the display device 126 to display to the user an instruction to adjust the exposure of the first detector element 118 and the second detector element 120.

6. The control arrangement 132 according to any one of the previous claims, wherein the controller 124 is further configured to control the display device 126 to display at least one visual element that indicates to the user whether the angle of rotation, the amount of first displacement, the amount of second displacement, and/or the amount of third displacement is above or below the rotational threshold, the first translational threshold, the second translational threshold and/or the third translational threshold, respectively.

7. The control arrangement 132 according to claim 6, wherein the visual element further indicates a direction an adjustment element of the optical adjustment device 122 needs to be moved in in order to reduce the angle of rotation, the amount of first displacement, the amount of second displacement, and/or the amount of third displacement below the rotational threshold, the first translational threshold, the second translational threshold and/or the third translational threshold, respectively.

8. The control arrangement 132 according to any one of the previous claims, wherein the controller 124 is further configured to determine based on the image data whether a predefined element 304 of the calibration sample 300 is within the field of view of the detection optics 108; and
to control the display device 126 to display to the user an instruction to move the calibration sample 300 in the field of view of the detection optics 108 until the predefined element 304 is within the field of view of the detection optics 108; or
to control a positioning device 104 of the imaging device 100 to move the calibration sample 300 in the field of view of the detection optics 108 until the predefined element 304 is within the field of view of the detection optics 108.

9. The control arrangement 132 according to any one of the previous claims, having an input device 128 configured to receive user input from the user, wherein the controller 124 is configured to start controlling the optical adjustment device 122 based on a user input.

10. The control arrangement 132 according to claim 9, wherein the controller 124 is configured to control the exposure of the first detector element 118 and/or the second detector element 120 based on a user input.

11. The control arrangement 132 according to any one of the previous claims, wherein the controller 124 is configured to perform an image registration on the first image and the second image, when the angle of rotation is below the rotational threshold, the amount of first displacement is below the first translational threshold, and the amount of second displacement is below the second translational threshold.

12. An imaging device 100, comprising:
the control arrangement 132 according to any one of the previous claims,
the optical adjustment device 122,
the detection optics 108 configured to receive detection light and to direct the detection light into a main beam path 110,
a beam splitting element 112 configured to direct part of the detection light into a first branched beam path 114 and another part of the detection light into a second branched beam path 116,
the first detector element 118 arranged in the first branched beam path 114,
configured to generate image data from the detection light received via the first branched beam path 114 and mounted by the optical adjustment device 122, and
the second detector element 120 arranged in the second branched beam path 116 and configured to generate image data from the detection light received via the second branched beam path 116.

13. A method for controlling the optical adjustment device 122 of the imaging device 100 according to claim 12, the method comprising the following steps:
a) determining whether a calibration sample 300 has been placed in the field of view of the detection optics 108,
b) determining whether an angle of rotation between a first image of the calibration sample 300 captured by the first detector element 118 and a second image of the calibration sample 300 captured by the second detector element 120 is below a predetermined rotational threshold,
c) displaying to the user an instruction to rotate the first detector element 118 using the optical adjustment device 122 until the angle of rotation is below the rotational threshold,
d) determining whether an amount of first displacement along a first direction between the first image and the second image is below a predetermined first translational threshold,
e) displaying to the user an instruction to move the first detector element 118 along the first direction using the optical adjustment device 122 until the amount of first displacement is below the first translational threshold,
f) determining whether an amount of second displacement along a second direction perpendicular to the first direction between the first image and the second image is below a predetermined second translational threshold, and
g) displaying to the user an instruction to move the first detector element 118 along the second direction using the optical adjustment device 122 until the amount of second displacement is below the second translational threshold.

14. A method for controlling the optical adjustment device 122 of the imaging device 100 according to claim 12, the method comprising the following steps:
a) displaying to the user the status of the optical adjustment of the optical adjustment device 122,
b) determining whether a calibration sample 300 has been placed in the field of view of the detection optics 108,
c) determining whether an angle of rotation between a first image of the calibration sample 300 captured by the first detector element 118 and a second image of the calibration sample 300 captured by the second detector element 120 is below a predetermined rotational threshold,
d) controlling a first drive 206a of the optical adjustment device 122 to rotate the first detector element 118 until the angle of rotation is below the rotational threshold,
e) determining whether an amount of first displacement along a first direction between the first image and the second image is below a predetermined first translational threshold,
f) controlling a second drive 208a of the optical adjustment device 122 to move the first detector element 118 along the first direction until the amount of first displacement is below the first translational threshold,
g) determining whether an amount of second displacement along a second direction perpendicular to the first direction between the first image and the second image is below a predetermined second translational threshold, and
h) controlling a third drive 210 of the optical adjustment device 122 to move the first detector element 118 along the second direction until the amount of second displacement is below the second translational threshold.

15. Computer program product comprising a program code that causes the imaging device 100 according to claim 12 to perform the method according to claim 13 and/or 14 when run on a processor.
